# EUROPEAN PATENT SPECIFICATION

(11) **EP 2 778 378 B1**
(45) Date of publication and mention of the grant of the patent: **27.09.2017**
(21) Application number: 11842452.2
(22) Date of filing: 26.10.2011
(51) Int. Cl.: F02D 45/00, F02D 19/08

(54) **FUEL PROPERTY DETERMINATION DEVICE FOR INTERNAL COMBUSTION ENGINE**
VORRICHTUNG ZUR BESTIMMUNG VON KRAFTSTOFFEIGENSCHAFTEN FÜR VERBRENNUNGSMOTOREN
DISPOSITIF DE DÉTERMINATION DES CARACTÉRISTIQUES D'UN CARBURANT POUR MOTEUR À COMBUSTION INTERNE

(43) Date of publication of application: 17.09.2014
(73) Proprietor: Toyota Jidosha Kabushiki Kaisha, Toyota-shi, Aichi 471-8571 (JP)
(72) Inventor: MINAMI, Masahiro, Toyota-shi, Aichi 471-8571 (JP)
(74) Representative: D Young & Co LLP
(86) International application number: PCT/JP2011/074661
(87) International publication number: WO 2013/061418

(56) References cited:
- WO-A1-2009/112907
- WO-A1-2011/061851
- JP-A- 2005 344 550
- JP-A- 2008 291 812
- JP-A- 2009 174 322
- JP-A- 2010 024 870
- JP-A- 2011 043 079
- US-A1- 2007 079 647
- US-A1- 2007 169 748
- US-A1- 2009 198 456
- US-A1- 2010 236 524

## Description

### [Technical Field]

The present invention relates to a fuel property determination apparatus of a compression self-ignition internal combustion engine represented by a diesel engine. In particular, the present invention relates to a measure for improving precision in fuel property determination.

### [Background Art]

As is conventionally known, with a diesel engine used as an automobile engine or the like, there is demand for realizing an improvement in exhaust emission, the securement of required engine torque, an improvement in fuel consumption rate, and the like. One means for meeting these demands is to ensure a proper combustion state of fuel in the cylinders. In order to ensure a proper combustion state, it is necessary for the control values of control parameters such as the fuel injection timing, the fuel injection amount, and the like to be appropriately set according to fuel properties.

One fuel property of light oil (hereinafter, sometimes referred to as "fuel") used as fuel in a diesel engine is the cetane number, and the ignition performance of fuel is influenced by the cetane number.

Cetane contained in fuel (straight-chain molecular structure capable of undergoing a low-temperature oxidation reaction such as n-cetane (C₁₆H₃₄), and hereinafter the low-temperature oxidation reaction component is sometimes referred to as "n-cetane etc.") is a component that can ignite even in the case where the in-cylinder pressure is relatively low and the case where the in-cylinder temperature is relatively low, and the greater the amount of cetane, the more easily a low-temperature oxidation reaction progresses in the cylinders, thus suppressing ignition delay. In other words, the higher the cetane number of fuel is, the more favorable the ignition performance of the fuel is, and the less ignition delay there is in premixed combustion. Conversely, the lower the cetane number of fuel is, the worse the ignition performance is, and the more ignition delay there is in premixed combustion.

For this reason, in order to meet the above-described demands, it is necessary to highly precisely determine the cetane number of the fuel being used, and control the above-described control parameters (fuel injection aspects such as the fuel injection timing and the fuel injection amount) according to the determined cetane number.

Means for determining the cetane number of fuel are proposed in Patent Literature 1 and Patent Literature 2 described below.

Patent Literature 1 discloses that the cetane number is determined based on the combustion rate in the case where a minute amount of fuel was injected. Specifically, the cetane number is specified based on the combustion rate (=combusted fuel amount/fuel injection amount) in a predetermined sampling period after fuel injection.

Also, Patent Literature 2 discloses that the cetane number of fuel is determined according to the engine exhaust gas temperature and operating condition (engine load). Specifically, the lower the cetane number is, the longer the fuel ignition delay period is, and thus the greater the amount of unburnt fuel is, whereby the exhaust gas temperature tends to be lower, and in view of this, the lower the exhaust gas temperature is, the lower the cetane number of the fuel is determined to be.

US2007079647 discloses a cetane determination method, wherein the cetane number is estimated from the ignition delay during a "cold flame" combustion period.

WO2009112907 discloses an estimation of cetane from the amount of torque produced by the combustion.

### [Citation List]

### [Patent Literature]

[PTL 1] JP 2009-174322A [PTL 2] JP 2010-127257A

### [Disclosure of Invention]

### [Technical Problems]

However, with conventional cetane number determination methods, it is a reality that sufficient precision has not been obtained in cetane number determination, and the control values of control parameters set according to the determined cetane number have not been appropriate values.

For example, Patent Literature 1 discloses that cetane number determination is performed when pilot injection is executed, and the sampling period that is set is the period from the start of the combustion of fuel injected in pilot injection to the start of the combustion of fuel injected in main injection. According to this configuration, the sampling period greatly varies according to the injection timing of main injection, and thus the state of change in the temperature inside the combustion chamber (in-cylinder temperature) in the sampling period also varies greatly. For this reason, the combustion rate (=combusted fuel amount/fuel injection amount) has not necessarily been a value that reflects the cetane number of the fuel (in the case where the injection timing of main injection is delayed, components other than the low-temperature oxidation reaction component such as n-cetane undergo combustion before the start of main combustion, and thus the combustion rate in the sampling period varies greatly (the combustion rate is not in accordance with the cetane number)), and there has been a high possibility of this leading to erroneous cetane number determination.

Also, the engine exhaust gas temperature greatly varies according to not only the cetane number of fuel, but also other parameters as well (e.g., the EGR rate and outside air temperature), and thus there has been a high possibility of erroneous cetane number determination in the cetane number determination method disclosed Patent Literature 2 as well.

The present invention has been achieved in light of such points, and an object thereof is to provide a fuel property determination apparatus of an internal combustion engine that can improve precision in fuel property (cetane number) determination.

### [Means for Solving the Problems]

### - Overview of Invention -

As an overview of the present invention conceived in order to achieve the aforementioned object, using the fact that in the case where fuel injected into a cylinder burns, the combustion period of a component (e.g., n-cetane etc.) that serves as a cetane number indicator can be separated from the combustion period of other components, the cetane number of fuel is determined from the equivalent torque in the former combustion period (e.g., the torque generated in the former combustion period in the case where a defined amount of fuel was injected).

### - Solving Means -

Specifically, the present invention is premised on a fuel property determination apparatus for determining a property of fuel being used in a compression self-ignition internal combustion engine in which combustion is performed due to self-ignition of fuel injected from a fuel injection valve into a cylinder. The fuel property determination apparatus is configured so as to determine the cetane number of the fuel based on an equivalent torque in a combustion period on the angle of advance side in a state in which a torque generation period of torque generated by combustion of fuel when fuel injection was performed at a defined amount one time is divided into two periods. Specifically, the higher the equivalent torque is, the higher the cetane number of the fuel is determined to be.

According to this specified matter, in the case where fuel (light oil) was injected into a cylinder, the low-temperature oxidation reaction components such as n-cetane contained in the fuel starts to burn when the in-cylinder gas temperature reaches the low-temperature oxidation reaction start temperature of the fuel. Then, in the case where the injection of fuel from the injection valve into the cylinder ends before the in-cylinder gas temperature reaches the high-temperature oxidation reaction start temperature of the fuel, the combustion of all or the majority of the low-temperature oxidation reaction components such as n-cetane contained in that fuel ends by the time the in-cylinder gas temperature reaches the high-temperature oxidation reaction start temperature. In other words, in the period up to when the in-cylinder gas temperature reaches the high-temperature oxidation reaction start temperature (the combustion period on the angle of advance side), only the low-temperature oxidation reaction components such as n-cetane in the fuel burns, and the components other than n-cetane etc. have not started burning. For this reason, a value with a high correlation with the cetane number of the fuel is obtained as the equivalent torque generated by the combustion of fuel in this period, and the cetane number of the fuel can be determined from that equivalent torque. In this way, the cetane number can be determined highly precisely

Also, as a specific equivalent torque integration period, an integration start time thereof is a time when an in-cylinder gas temperature has reached a low-temperature oxidation reaction start temperature of the fuel, and an equivalent torque integration end time is a time when the in-cylinder gas temperature has reached a high-temperature oxidation reaction start temperature of the fuel.

This enables highly precisely calculating the equivalent torque and further raising precision in the cetane number determination.

Also, an operation of determining the cetane number is executed conditional upon at least completion of control for learning an injected amount of fuel from the fuel injection valve.

This enables the fuel injection amount used when the cetane number determination operation is executed to be highly precisely set to a defined amount, and enables raising precision in the cetane number determination. Note that one example of fuel injection amount learning control is known minute fuel injection amount learning control (when a minute amount of fuel is injected at a no-load time of the internal combustion engine, control is performed for learning whether the fuel injection amount deviated depending on whether the amount of change in the engine operation condition matches a defined amount of change).

Also, an operation of determining the cetane number is executed by performing fuel injection at a no-load time of the internal combustion engine.

According to this configuration, the cetane number can be determined from fuel injection at a timing that has no influence on the traveling performance of the vehicle, thus eliminating poor drivability due to the cetane number determination operation.

### [Effects of the Invention]

According to the present invention, the cetane number of fuel is determined based on the equivalent torque in the combustion period on the angle of advance side out of two periods into which the torque generation period has been divided. This enables determining the cetane number based on the equivalent torque resulting from combustion due to only n-cetane etc., and enables improving precision in the cetane number determination.

### [Brief Description of Drawings]

[FIG. 1] FIG. 1 is a diagram showing the schematic configuration of an engine and a control system thereof according to an embodiment.
[FIG. 2] FIG. 2 is a cross-sectional diagram showing a combustion chamber of a diesel engine and its surroundings.
[FIG. 3] FIG. 3 is a block diagram showing the configuration of a control system such as an ECU.
[FIG. 4] FIG. 4 is a flowchart showing a procedure of a cetane number determination operation and an engine control operation.
[FIG. 5] FIG. 5 is a diagram showing an example of a cetane number determination map.
[FIG. 6] FIG. 6 is a diagram showing change in the heat generation rate, the in-cylinder gas temperature, the equivalent torque generation rate, and the fuel injection rate when minute fuel amount injection is executed.

### [Mode for Carrying Out the Invention]

An embodiment of the present invention is described below with reference to the drawings. In this embodiment, a case will be described in which the present invention is applied to a common rail in-cylinder direct injection multi-cylinder (for example, inline four-cylinder) diesel engine (compression self-ignition internal combustion engine) mounted in an automobile.

### - Engine configuration -

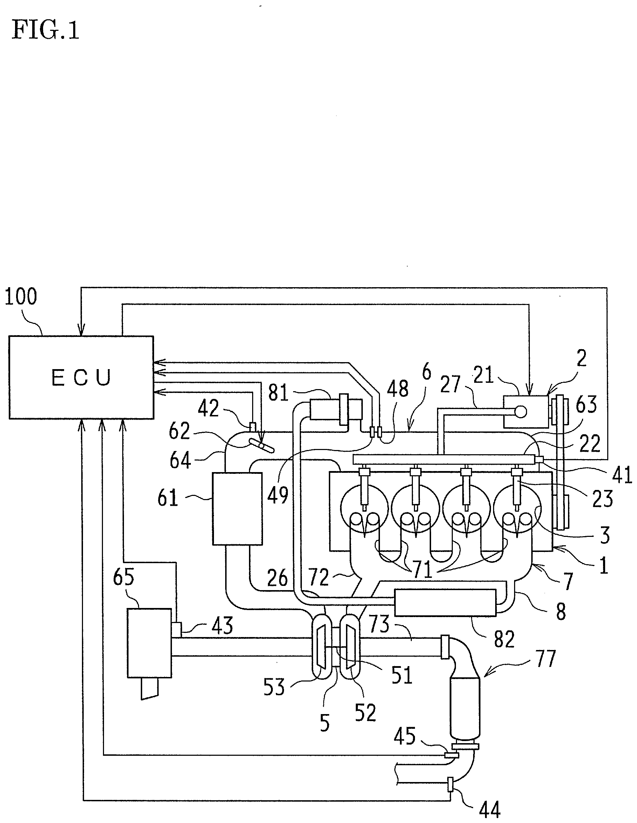

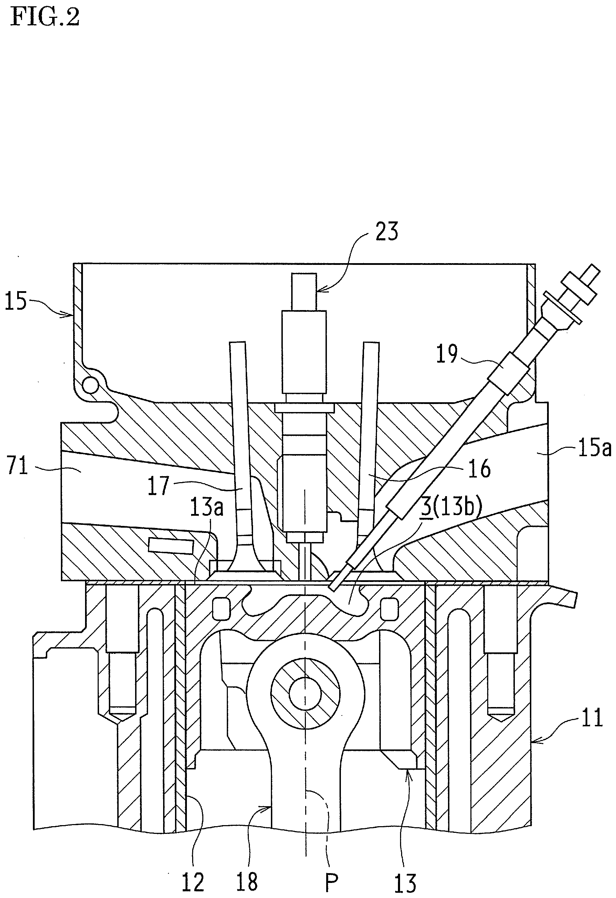

First, the overall configuration of a diesel engine (referred to below as simply the engine) according to the present embodiment will be described. FIG. 1 is a schematic configuration diagram of an engine 1 and a control system thereof according to the present embodiment. Also, FIG. 2 is a cross-sectional diagram showing a combustion chamber 3 of the diesel engine and its surroundings.

As shown in FIG. 1, the engine 1 of the present embodiment is configured as a diesel engine system having a fuel supply system 2, combustion chambers 3, an intake system 6, an exhaust system 7, and the like as its main portions.

The fuel supply system 2 is configured including a supply pump 21, a common rail 22, injectors (fuel injection valves) 23, an engine fuel path 27, and the like.

The supply pump 21 draws fuel from a fuel tank, and after putting the drawn fuel under high pressure, supplies the fuel to the common rail 22 via the engine fuel path 27. The common rail 22 has the functionality of an accumulation chamber in which the high pressure fuel is held (accumulated) at a predetermined pressure, and this accumulated fuel is distributed to the injectors 23. The injectors 23 are configured from piezo injectors within which a piezoelectric element (piezo element) is provided, and supply fuel by injection into the combustion chambers 3 by appropriately opening a valve.

The intake system 6 is provided with an intake manifold 63 connected to an intake port 15a formed in a cylinder head 15 (see FIG. 2), and an intake pipe 64 that constitutes an intake path is connected to the intake manifold 63. Also, in this intake path, an air cleaner 65, an air flow meter 43, and a throttle valve (intake throttle valve) 62 are disposed in the stated order from the upstream side. The air flow meter 43 outputs an electrical signal according to the amount of air that flows into the intake path via the air cleaner 65.

The exhaust system 7 is provided with an exhaust manifold 72 that is connected to the exhaust ports 71 formed in the cylinder head 15, and an exhaust pipe 73 that constitutes an exhaust path is connected to the exhaust manifold 72. Also, an exhaust purification apparatus 77 is provided in the exhaust path. The exhaust purification apparatus 77 includes catalysts (a NOx storage catalyst and an oxidation catalyst) and a DPF (Diesel Particulate Filter). Also, a DPNR catalyst (Diesel Particulate-NOx Reduction catalyst) may be employed as the exhaust purification apparatus 77.

The following describes the combustion chamber 3 of the diesel engine and its surroundings with reference to FIG. 2. As shown in FIG. 2, in a cylinder block 11 that constitutes part of the engine, a cylindrical cylinder bore 12 is formed in each cylinder (each of four cylinders), and a piston 13 is housed within each cylinder bore 12 such that the piston 13 can slide vertically.

The combustion chamber 3 is formed on the top side of a top face 13a of the piston 13. In other words, the combustion chamber 3 is defined by a lower face of the cylinder head 15 installed on top of the cylinder block 11, an inner wall face of the cylinder bore 12, and the top face 13a of the piston 13. A cavity (recess) 13b is provided in substantially the center of the top face 13a of the piston 13, and this cavity 13b also constitutes part of the combustion chamber 3.

The piston 13 is linked to a crankshaft serving as the engine output shaft by a connecting rod 18. Thus, back and forth movement of the piston 13 within the cylinder bore 12 is transmitted to the crankshaft via the connecting rod 18, and engine output is obtained due to rotation of this crankshaft. Also, a glow plug 19 is disposed facing the combustion chamber 3. The glow plug 19 glows due to the flow of electrical current immediately before the engine 1 is started, and functions as a starting assistance apparatus whereby ignition and combustion are promoted due to part of a fuel spray being blown onto the glow plug.

The intake port 15a and the exhaust port 71 are formed in the cylinder head 15, and furthermore an intake valve 16 that opens/closes the intake port 15a and an exhaust valve 17 that opens/closes the exhaust port 71 are disposed in the cylinder head 15. Also, the injector 23 that injects fuel directly into the combustion chamber 3 is installed in the cylinder head 15. The injector 23 is disposed substantially in the center above the combustion chamber 3, in an erect orientation along the cylinder centerline P, and injects fuel introduced from the common rail 22 toward the combustion chamber 3 in accordance with a predetermined timing.

Furthermore, as shown in FIG. 1, the engine 1 is provided with a turbocharger 5. This turbocharger 5 is provided with a turbine wheel 52 and a compressor wheel 53 that are linked via a turbine shaft 51. The compressor wheel 53 is disposed facing the inside of the intake pipe 64, and the turbine wheel 52 is disposed facing the inside of the exhaust pipe 73. Thus the turbocharger 5 uses exhaust flow (exhaust pressure) received by the turbine wheel 52 to rotate the compressor wheel 53, thereby performing a so-called supercharging operation that increases the intake pressure. In the present embodiment, the turbocharger 5 is a variable nozzle-type turbocharger, in which a variable nozzle vane mechanism (not shown) is provided on the turbine wheel 52 side, and by adjusting the opening degree of this variable nozzle vane mechanism it is possible to adjust the supercharging pressure of the engine 1.

An intercooler 61 for forcibly cooling intake air heated due to supercharging with the turbocharger 5 is provided in the intake pipe 64 of the intake system 6.

Also, the engine 1 is provided with an exhaust gas recirculation path (EGR path) 8 that connects the intake system 6 and the exhaust system 7. The EGR path 8 reduces the combustion temperature by appropriately directing part of the exhaust gas back to the intake system 6 and resupplying that exhaust gas to the combustion chamber 3, thus reducing the amount of NOx produced. Also, provided in the EGR path 8 are an EGR valve 81 that by being opened/closed steplessly under electronic control is capable of freely adjusting the flow rate of exhaust gas that flows through the EGR path 8, and an EGR cooler 82 for cooling exhaust that passes through (recirculates through) the EGR path 8. The EGR apparatus (exhaust gas recirculation apparatus) is constituted by the EGR path 8, the EGR valve 81, the EGR cooler 82, and the like.

### - Sensors -

Various sensors are installed at respective sites of the engine 1, and these sensors output signals related to environmental conditions at the respective sites and the operating state of the engine 1.

For example, the air flow meter 43 outputs a detection signal according to the flow rate of intake air (the amount of intake air) on the upstream side of the throttle valve 62 within the intake system 6. An intake temperature sensor 49 is disposed in the intake manifold 63 and outputs a detection signal according to the temperature of intake air. An intake pressure sensor 48 is disposed in the intake manifold 63 and outputs a detection signal according to the intake air pressure. An A/F (air-fuel ratio) sensor 44 outputs a detection signal that changes in a continuous manner according to the oxygen concentration in exhaust gas on the downstream side of the exhaust purification apparatus 77 of the exhaust system 7. An exhaust temperature sensor 45 likewise outputs a detection signal according to the temperature of exhaust gas (exhaust gas temperature) on the downstream side of the exhaust purification apparatus 77 of the exhaust system 7. A rail pressure sensor 41 outputs a detection signal according to the pressure of fuel accumulated in the common rail 22. A throttle opening degree sensor 42 detects the opening degree of the throttle valve 62.

### -ECU-

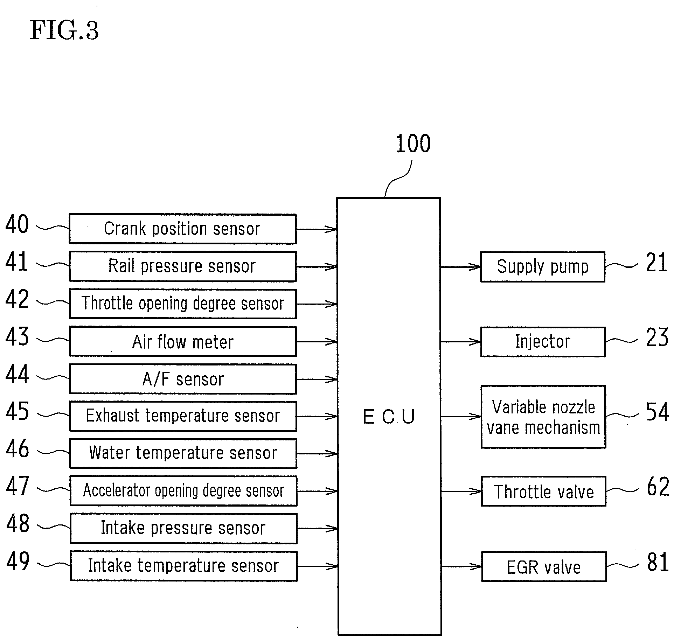

An ECU 100 includes a microcomputer configured by a CPU, a ROM, a RAM, and the like (not shown), and input/output circuits. As shown in FIG. 3, the input circuit of the ECU 100 is connected to the rail pressure sensor 41, the throttle opening degree sensor 42, the air flow meter 43, the A/F sensor 44, the exhaust temperature sensor 45, the intake pressure sensor 48, and the intake temperature sensor 49. Furthermore, the input circuit is connected to a water temperature sensor 46 that outputs a detection signal according to the coolant temperature of the engine 1, an accelerator opening degree sensor 47 that outputs a detection signal according to the amount of accelerator pedal depression, a crank position sensor 40 that outputs a detection signal (pulse) each time the output shaft (crankshaft) of the engine 1 rotates a specific angle, and the like.

On the other hand, the output circuit of the ECU 100 is connected to the supply pump 21, the injectors 23, the throttle valve 62, the EGR valve 81, and the variable nozzle vane mechanism (actuator that adjusts the opening degree of the variable nozzle vane) 54 of the turbocharger 5.

The ECU 100 also executes various types of control of the engine 1 based on output from the various sensors described above, calculation values obtained from an arithmetic expression employing the output values, or various maps stored in the ROM.

For example, the ECU 100 executes pilot injection (auxiliary injection) and main injection as fuel injection control with respect to the injectors 23.

Pilot injection is an operation for injecting a small amount of fuel prior to main injection from the injectors 23. Also, this pilot injection is an injection operation for suppressing ignition delay of fuel due to main injection so as to lead to stable diffusion combustion, and is sometimes also called "auxiliary injection".

Main injection is an injection operation for generating torque in the engine 1 (an operation for supplying fuel for torque generation). The injection amount in main injection is basically determined so as to obtain a required torque in accordance with operating conditions such as the engine speed, the accelerator operation amount, the coolant temperature, and the intake air temperature. For example, the greater the engine speed (engine speed calculated based on the detection value from the crank position sensor 40) is or the greater the accelerator operation amount (the accelerator pedal depression amount detected by the accelerator opening degree sensor 47) is (i.e., the greater the accelerator opening degree is), the greater the torque requirement value of the engine 1 is, and the higher the fuel injection amount in main injection is, which is set according to the required torque value.

As one example of a specific fuel injection form, pilot injection (fuel injection from a plurality of injection holes formed in the injector 23) is executed before the piston 13 reaches compression top dead center, then fuel injection is suspended, and after a predetermined interval, main injection is executed when the piston 13 reaches the vicinity of compression top dead center. Accordingly, fuel burns due to self ignition, and the energy generated by this combustion then becomes kinetic energy for pushing the piston 13 down toward bottom dead center (energy that is to serve as engine output), thermal energy for raising the temperature in the combustion chamber 3, and thermal energy that is dissipated to the outside (e.g., coolant) via the cylinder block 11 and the cylinder head 15.

Note that in addition to the above-described pilot injection and main injection, after-injection and post-injection are performed as necessary. Since the functions of these types of injection are well known, descriptions thereof will not be given here.

Also, the ECU 100 adjusts the amount of exhaust gas (EGR amount) that is recirculated to the intake manifold 63 by controlling the opening degree of the EGR valve 81 in accordance with the operating state of the engine 1. The EGR amount is set in accordance with an EGR map that is created in advance through experimentation, simulation, or the like and stored in the ROM. The EGR map is a map for determining the EGR amount (EGR rate) using the engine speed and the engine load as parameters.

The fuel injection pressure when executing fuel injection is determined by the internal pressure of the common rail 22. In regard to the internal pressure of the common rail, normally, the higher the engine load (combustion engine load) is, and the higher the engine speed (combustion engine speed) is, the greater the target value for the pressure of fuel supplied from the common rail 22 to the injectors 23 (i.e., the target rail pressure) is. Note that the target rail pressure is set in accordance with, for example, a fuel pressure setting map stored in the ROM. It should also be noted that in the present embodiment, the fuel pressure is adjusted between 30 MPa and 200 MPa according to the engine load and the like.

Also, the ECU 100 determines the fuel injection amount and the fuel injection form based on the engine operating state. Specifically, the ECU 100 calculates the engine rotational speed based on the detection value from the crank position sensor 40, obtains the accelerator pedal depression amount (accelerator opening degree) based on the detection value from the accelerator opening degree sensor 47, and determines the total fuel injection amount (sum of the injection amount in pilot injection and the injection amount in main injection) based on the engine rotational speed and the accelerator opening degree.

### - Minute fuel injection amount learning control -

In the engine 1 of the present embodiment, minute fuel injection amount learning control (also called minute injection control or minute Q control) is executed in order to correct deviation in the fuel injection amount of fuel from the injector 23. The following describes an overview of this minute fuel injection amount learning control.

This minute fuel injection amount learning control is control for acquiring a learned value corresponding to, for example, change in the fuel injection amount of fuel from the injector 23 (change in injection properties) over time. Specifically, it is control for acquiring a learned value that does not allow deviation between a target minute fuel injection amount (minute fuel injection amount instruction value: target fuel injection amount) and the actual minute fuel injection amount (actual fuel injection amount).

This minute fuel injection amount learning control is performed at an engine no-load time while the automobile is traveling. Specifically, at a no-injection time when the fuel injection amount of which the injector 23 is instructed is zero (e.g., when the accelerator opening degree becomes "0" during traveling), one-time injection is executed in order to inject a minute amount of fuel equivalent to the pilot injection amount to a specific cylinder (the cylinder in which the piston 13 is in the vicinity of compression top dead center), and the amount of change in the engine speed or the like (amount of change in an engine operating condition) that accompanies the one-time injection is recognized. Then, data on the amount of change in the engine operating condition in the case where one-time injection at a predetermined amount was performed accurately is compared with the amount of change in an engine operating condition in the case where one-time injection was actually performed, and the learned value of a pilot injection amount setting map (a map storing, for each cylinder (each injector), the relationship between the pilot injection amount and the injector 23 energized time (valve open time)) is corrected in accordance with the amount of deviation. This operation is executed for each common rail pressure and each cylinder in the pilot injection amount setting map, thus enabling performing pilot injection with an appropriate pilot injection amount for all of the cylinders regardless of the common rail pressure.

As one form of injection of fuel into a cylinder when the minute fuel injection amount learning control is executed, a minute amount (e.g., 2.0 mm³) of fuel equivalent to the pilot injection amount is injected when the position of the piston 13 in the cylinder that is in the compression stroke reaches compression top dead center (TDC). Fuel is injected at that timing because performing fuel injection when the in-cylinder temperature is highest (when the air inside the cylinder is compressed the most) causes substantially the entire amount of that fuel to burn in a short period.

### - Cetane number determination operation -

The following describes a cetane number determination operation, which is a feature operation of the present embodiment.

The cetane number determination operation is used for determining the cetane number of fuel (light oil) that is currently being used by the engine 1, that is to say, fuel that is stored in the fuel tank, and performing engine control in accordance with the cetane number.

First, an outline of the cetane number determination operation will be described. Light oil serving as fuel in the diesel engine 1 contains low-temperature oxidation reaction components (e.g., fuel with a straight-chain single bond composition such as n-cetane (C₁₆H₃₄)). This n-cetane etc. is a component that can ignite even when the in-cylinder temperature is relatively low, and the greater the amount of n-cetane etc. (the higher cetane fuel is), the more easily a low-temperature oxidation reaction progresses in the cylinders, thus suppressing ignition delay. Specifically, n-cetane etc. starts to burn when the in-cylinder temperature reaches a predetermined temperature (e.g., 750 K, which is the low-temperature oxidation reaction start temperature). On the other hand, the fuel components other than n-cetane etc. do not start to burn until the in-cylinder temperature reaches a predetermined temperature (e.g., 900 K, which is the high-temperature oxidation reaction start temperature) that is higher than the combustion start temperature of n-cetane etc.

For this reason, letting "total torque" be the torque generated in the case of assuming that all of the fuel injected from the injector 23 has burned, and "n-cetane combustion torque" be the torque generated by the combustion of n-cetane etc., a value that is correlated with the cetane number is obtained as the ratio of the n-cetane combustion torque to the total torque (hereinafter, referred to as the "torque ratio").

With the cetane number determination operation of the present embodiment, the cetane number is determined from the torque ratio in the case of performing fuel injection at a pre-set defined amount (e.g., 2.0 mm³). For this reason, the torque ratio and the torque generated by the combustion of n-cetane etc. are in a unique relationship. In other words, the equivalent torque due to the combustion of n-cetane etc. in the case of performing fuel injection at the defined amount is a value that reflects the cetane number. For this reason, the following describes the case of using equivalent torque as a cetane number determination indicator.

In order to highly precisely obtain the equivalent torque, it is necessary to separate the n-cetane etc. combustion period from the combustion period of the components other than n-cetane etc., and to accurately measure the torque generated in the n-cetane etc. combustion period. In the present embodiment, a fuel injection timing is defined in advance in order to separate the n-cetane etc. combustion period from the combustion period of the fuel components other than n-cetane etc.

Specifically, a fuel injection timing (crank angle at which fuel injection starts) that enables separating the n-cetane etc. combustion period from the combustion period of the fuel components other than n-cetane etc. is obtained in advance for each engine speed through experimentation or simulation, and the obtained fuel injection timings are mapped and stored in the ROM. This map (hereinafter, referred to as the "fuel injection timing map") is created in order to monitor the n-cetane etc. combustion period and the combustion period of fuel components other than n-cetane etc. by making it possible to detect the in-cylinder pressure through experimentation, simulation, or the like and obtaining the heat generation rate from change in the in-cylinder pressure during combustion, and obtain, for each engine speed, the fuel injection timing at which these periods are separated (there is a period for which the heat generation rate is "0" between the waveform of the heat generation rate due to the combustion of n-cetane etc. and the waveform of the heat generation rate due to the combustion of the fuel components other than n-cetane etc.). The relationship between the engine speed and the fuel injection timing is set such that the fuel injection timing is farther on the angle of advance side the higher the engine speed is. Also, the fuel injection timing defined by the fuel injection timing map is limited to the angle of advance side in order to prevent worsening of ignition performance due to excessive fuel diffusion. In other words, it is preferable that the fuel injection timing defined by the fuel injection timing map is a timing at which the n-cetane etc. combustion period and the combustion period of the fuel components other than n-cetane etc. change from a partially overlapped state to a separated state in the case where the fuel injection timing is advanced (the timing that is most on the angle of delay side among fuel injection timings at which the n-cetane etc. combustion period and the combustion period of the fuel components other than n-cetane etc. can be separated).

Then, when executing the cetane number determination operation in an actual engine (the engine 1 mounted in a vehicle), the fuel injection timing that corresponds to the current engine speed is extracted from the fuel injection timing map, and fuel injection is executed at that timing. This enables executing the later-described cetane number determination operation in a state in which the n-cetane etc. combustion period and the combustion period of the fuel components other than n-cetane etc. are separated.

Also, a torque integration end angle (crank angle at which torque integration is ended), which is to serve as the timing for ending a torque integration operation, is set in advance according to the fuel injection timing read out from the fuel injection timing map through experimentation or simulation. This torque integration end angle is for defining the n-cetane etc. combustion end timing or the combustion start timing of components other than n-cetane etc. In other words, the torque integration end angle is defined in advance such that only torque generated by the combustion of n-cetane etc. in the fuel injected from the injector 23 is integrated.

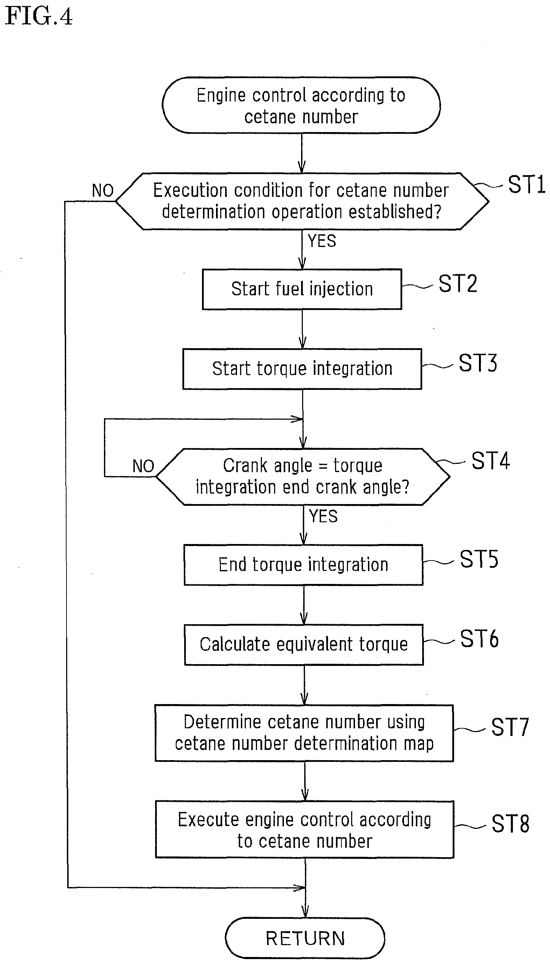

The following is a specific description of the cetane number determination operation. FIG. 4 is a flowchart showing a procedure of the cetane number determination operation and the engine control operation according to the present embodiment. These operations are executed every time the vehicle traveling distance reaches a predetermined distance (e.g., 500 km). Alternatively, these operations are executed during vehicle traveling after the fuel tank has been supplied with fuel.

First, in step ST1, it is determined whether a cetane number determination operation execution condition has been satisfied. For example, if both of the following conditions have been satisfied, it is determined that the cetane number determination operation execution condition has been satisfied.

(a) The minute fuel injection amount learning control has been completed.
(b) The position of the piston in the cylinder that is in the compression stroke has arrived at a fuel injection timing obtained from the fuel injection timing map.
The completion of the minute fuel injection amount learning control is used as a condition in order to appropriately obtain the fuel injection amount when the cetane number determination operation is executed (e.g., 2.0 mm³). The arrival of the position of the piston in the cylinder that is in the compression stroke at a fuel injection timing obtained from the fuel injection timing map is used as a condition in order to separate the n-cetane etc. combustion period from the combustion period of the fuel components other than n-cetane etc. as described above. Note that there is no limitation to these conditions, and the conditions can be set appropriately.

In the case where the cetane number determination operation execution condition is not satisfied, and a NO determination is made in step ST1, that is to say, in the case where, for example, the minute fuel injection amount learning control has not been completed, and it is possible that the precision of the fuel injection amount is not sufficient, the procedure returns without executing the cetane number determination operation.

In the case where the cetane number determination operation execution condition has been satisfied, and a YES determination is made in step ST1, the procedure moves to step ST2 in which the injection of fuel from the injector 23 is started. The amount of fuel injected here is set the same as the fuel injection amount in the minute fuel injection amount learning control (e.g., 2.0 mm³). In other words, whereas a minute amount of fuel is injected when the piston 13 has reached compression top dead center (TDC) in the minute fuel injection amount learning control, in the cetane number determination operation, a minute amount of fuel is injected when the piston 13 has reached a predetermined position before compression top dead center (a position at which the fuel injection timing obtained from the fuel injection timing map has been reached). Note that as described above, one example of a cetane number determination operation execution condition is that the minute fuel injection amount learning control has been completed, and therefore this minute fuel amount injection is not that in the fuel amount learning control (control for correcting deviation in the fuel injection amount), but rather is minute fuel injection specialized for cetane number determination.

After this minute fuel amount injection has started, the procedure moves to step ST3 in which the integration of torque generated along with this fuel injection is started. In the torque integration operation, the integration of torque values calculated based on the engine speed, which is calculated based on a detection value from the crank position sensor 40, continues until the later-described torque integration end timing (in the later-described step ST5). Also, the timing at which the torque integration is started is the time when the in-cylinder temperature has reached the low-temperature oxidation reaction start temperature. In the recognition of the in-cylinder temperature, it is possible to calculate the in-cylinder temperature based on the intake air temperature detected by the intake temperature sensor 49, the valve close timing of the intake valve 16, the compression ratio of the engine 1, the rotation angle position of the crankshaft, or the like. Recognizing the in-cylinder temperature in this way enables eliminating the need for an in-cylinder pressure sensor.

Thereafter, the procedure moves to step ST4 in which a determination is made as to whether the crank angle has reached the torque integration end angle. In the case where the crank angle has not reached the torque integration end angle, and a NO determination is made in step ST4, it is still currently the n-cetane etc. combustion period, and thus the torque integration is continued, and the arrival of the crank angle at the torque integration end angle is waited for.

In the case where the crank angle has reached the torque integration end angle, and a YES determination is made in step ST4, the procedure moves to step ST5 in which the torque integration is ended.

After the torque integration is ended in this way, the procedure moves to step ST6 in which the equivalent torque is calculated. Specifically, the integrated torque value is calculated as the equivalent torque.

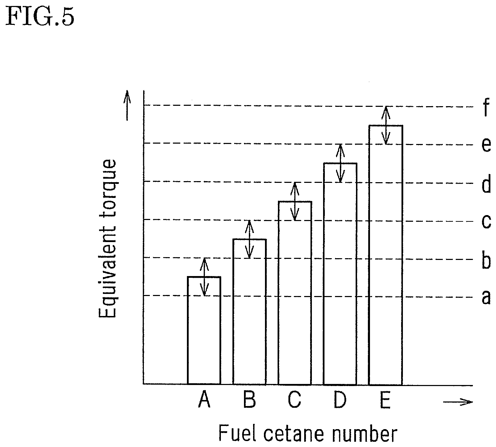

Then, in step ST7, the cetane number is determined from the equivalent torque. The cetane number determination map is used in this cetane number determination. FIG. 5 is a diagram showing an example of the cetane number determination map. This cetane number determination map defines the correlation between the equivalent torque and the fuel cetane number, and is created in advance through experimentation or simulation and stored in the ROM. With this cetane number determination map, the cetane number of fuel in the case where the equivalent torque is greater than or equal to *a* and less than *b* is determined to be A (e.g., 40), the cetane number of fuel in the case where the equivalent torque is greater than or equal to *b* and less than c is determined to be B (e.g., 42), the cetane number of fuel in the case where the equivalent torque is greater than or equal to *c* and less than d is determined to be C (e.g., 44), the cetane number of fuel in the case where the equivalent torque is greater than or equal to d and less than e is determined to be D (e.g., 48), and the cetane number of fuel in the case where the equivalent torque is greater than or equal to e and less than f is determined to be E (e.g., 52). In this way, with the cetane number determination map, the cetane number is determined to be higher the higher the equivalent torque is.

After the cetane number has been determined using the cetane number determination map, the procedure moves to step ST8 in which engine control is executed in order to adjust the control values of control parameters such as the injection timing and the injection amount of fuel to be injected from the injector 23 in accordance with the determined cetane number. For example, in the case where the determined cetane number is relatively low, the lower the cetane number is, the more the fuel injection timing (e.g., the injection timing of pilot injection) is corrected to the angle of advance side, and therefore an appropriate ignition period is obtained even if the degree of ignition delay increases due to a low cetane number. Also, the lower the cetane number is, the fuel injection amount (e.g., the injection amount in pilot injection) is corrected so as to be further increased, and therefore sufficient heat is obtained in in-cylinder preheating even in the case where the heat generation amount per unit of fuel is low due to a low cetane number. Alternatively, a configuration is possible in which control is executed such that the lower the cetane number is, the lower the fuel injection pressure is set so as to raise the density of n-cetane etc. in the combustion field, or the lower the EGR rate is set so as to raise the combustion temperature.

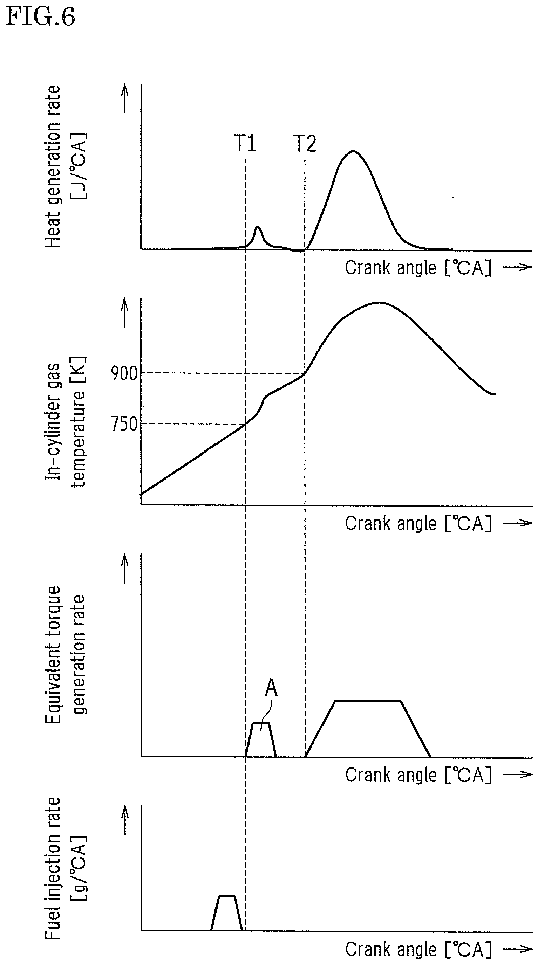

FIG. 6 is a diagram showing change in the heat generation rate, the in-cylinder gas temperature, the equivalent torque generation rate, and the fuel injection rate when minute fuel amount injection is executed. In this case, the torque is integrated from the start of the n-cetane etc. combustion period (timing T1 in FIG. 6) to the start of the combustion period of the fuel components other than n-cetane etc. (timing T2 in FIG. 6), the torque integrated in the period from timing T1 to timing T2 (which corresponds to the area of the equivalent torque generation rate A in FIG. 6) is acquired as the equivalent torque, and the cetane number is determined using the cetane number determination map.

As described above, according to the present embodiment, the cetane number is obtained from the equivalent torque. Since the n-cetane etc. combustion period and the combustion period of components other than n-cetane etc. are separated as described above, a value with a high correlation with the cetane number of fuel can be obtained as the equivalent torque, and it is possible to accurately determine the cetane number of the fuel from the equivalent torque, thus enabling improving precision in cetane number determination.

### - Other embodiments -

In the above-described embodiment, a description is given taking the example where the present invention is applied to an in-line four-cylinder diesel engine mounted in an automobile. The present invention is not limited to use in an automobile, and is applicable also to engines used in other applications. Also, there is no particular limitation with respect to the number of cylinders or the engine type (classified as an in-line engine, V-type engine, horizontal opposed engine, and so forth).

Also, in the above embodiment, the cetane number of fuel is determined by injecting a minute amount of fuel at an engine no-load time. The present invention is not limited to this, and a configuration is possible in which the cetane number of fuel is determined from the amount of energy generated along with the execution of pilot injection, or the cetane number of fuel is determined from the amount of energy generated along with the execution of main injection (one-time main injection), not along with pilot injection. In this case, the fuel injection amount is not a defined amount, and the torque generation amount relative to the total fuel injection amount corresponds to the equivalent torque. In other words, a value corresponding to the equivalent torque is obtained as the ratio of the torque generated in the n-cetane etc. combustion period to the torque generated in the case where the entire amount of the total fuel injection amount has burned, and the cetane number is obtained from that value. For this reason, even in the case of determining the cetane number when these types of injection are executed, it is necessary to set the fuel injection timing such that the n-cetane etc. combustion period and the combustion period of components other than n-cetane etc. are separated.

Also, in the above embodiment, the completion of the minute fuel injection amount learning control is used as a cetane number determination operation execution condition. The present invention is not limited to this, and the cetane number determination operation execution condition may be the completion of another test that can appropriately obtain the fuel injection amount (e.g., a test by a fuel flow amount sensor provided within the injector 23).

Also, although the above embodiment describes the case where a piezo injector 23 in which the fuel injection rate is changed by achieving full valve opening only when power is being conducted is applied to the engine 1, the present invention is also applicable to an engine in which a variable injection rate injector is applied.

### [Industrial Applicability]

The present invention is applicable to the determination of the cetane number of fuel being used in a common rail in-cylinder direct injection multi-cylinder diesel engine mounted in an automobile.

### [Reference Signs List]

- 1: engine (internal combustion engine)
- 12: cylinder bore
- 13: piston
- 23: injector (fuel injection valve)
- 3: combustion chamber
- 100: ECU

## Claims

1. A fuel property determination apparatus for determining a property of fuel being used in a compression self-ignition internal combustion engine in which combustion is performed due to self-ignition of fuel injected from a fuel injection valve into a cylinder,
wherein fuel in a defined amount is injected one time at a predetermined timing so that a combustion of the fuel injected one time is divided into two combustion periods constituted of a combustion period of a low-temperature oxidation reaction component in the injected fuel and a combustion period of other components, and
**characterised in that**
the cetane number of the fuel is determined based on an equivalent torque that is a torque integrated in the combustion period of the low-temperature oxidation reaction component.

2. The fuel property determination apparatus of an internal combustion engine according to claim 1, wherein the higher the equivalent torque is, the higher the cetane number of the fuel is determined to be.

3. The fuel property determination apparatus of an internal combustion engine according to claim 1 or 2, wherein an equivalent torque integration start time in the combustion period of the low-temperature oxidation reaction component is a time when an in-cylinder gas temperature has reached a low-temperature oxidation reaction start temperature of the fuel, and an equivalent torque integration end time is a time when the in-cylinder gas temperature has reached a high-temperature oxidation reaction start temperature of the fuel.

4. The fuel property determination apparatus of an internal combustion engine according to claim 1, 2, or 3, where an operation of determining the cetane number is executed conditional upon at least completion of control for learning an injected amount of fuel from the fuel injection valve.

5. The fuel property determination apparatus of an internal combustion engine according to any one of claims 1 to 4, wherein an operation of determining the cetane number is executed by performing fuel injection at a no-load time of the internal combustion engine.

## Patentansprüche

1. Kraftstoffeigenschaftsbestimmungsvorrichtung zum Bestimmen einer Eigenschaft eines Kraftstoffs, der in einer Kompressionszündungs-Verbrennungskraftmaschine verwendet wird, in der eine Verbrennung aufgrund einer Selbstzündung des Kraftstoffs, der von einem Kraftstoffeinspritzventil in einen Zylinder eingespritzt wird, durchgeführt wird,
wobei der Kraftstoff in einer definierten Menge ein Mal zu einem vorgegebenen Zeitpunkt eingespritzt wird, so dass eine Verbrennung des Kraftstoffs, der ein Mal eingespritzt wird, in zwei Verbrennungsperioden aufgeteilt wird, die aus einer Verbrennungsperiode eines Niedrigtemperatur-Oxidationsreaktionsbestandteils in dem eingespritzten Kraftstoff und einer Verbrennungsperiode anderer Bestandteile bestehen, und
**dadurch gekennzeichnet, dass**
die Cetanzahl des Kraftstoffs auf Basis eines äquivalenten Drehmoments bestimmt wird, bei dem es sich um ein Drehmoment handelt, das in die Verbrennungsperiode des Niedrigtemperatur-Oxidationsreaktionsbestandteils integriert ist.

2. Kraftstoffeigenschaftsbestimmungsvorrichtung einer Verbrennungskraftmaschine nach Anspruch 1, wobei bestimmt wird, dass, je höher das äquivalente Drehmoment ist, desto höher die Cetanzahl des Kraftstoffs ist.

3. Kraftstoffeigenschaftsbestimmungsvorrichtung einer Verbrennungskraftmaschine nach Anspruch 1 oder 2, wobei eine Integrationsstartzeit des äquivalenten Drehmoments in der Verbrennungsperiode des Niedrigtemperatur-Oxidationsreaktionsbestandteils eine Zeit ist, in der eine innerzylindrische Gastemperatur eine Niedrigtemperatur-Oxidationsreaktionsstarttemperatur des Kraftstoffs erreicht hat, und eine Integrationsendzeit des äquivalenten Drehmoments eine Zeit ist, in der die innerzylindrische Gastemperatur eine Hochtemperatur-Oxidationsreaktionsstarttemperatur des Kraftstoffs erreicht hat.

4. Kraftstoffeigenschaftsbestimmungsvorrichtung einer Verbrennungskraftmaschine nach Anspruch 1, 2 oder 3, wobei ein Vorgang des Bestimmens der Cetanzahl unter der Bedingung durchgeführt wird, dass zumindest die Steuerung zum Erfahren einer von dem Kraftstoffeinspritzventil eingespritzten Menge an Kraftstoff beendet ist.

5. Kraftstoffeigenschaftsbestimmungsvorrichtung einer Verbrennungskraftmaschine nach einem der Ansprüche 1 bis 4, wobei ein Vorgang des Bestimmens der Cetanzahl durchgeführt wird, indem eine Kraftstoffeinspritzung in einer Nichtlastzeit der Verbrennungskraftmaschine durchgeführt wird.

## Revendications

1. Appareil de détermination de propriété de carburant pour déterminer une propriété de carburant utilisé dans un moteur à combustion interne à auto-allumage de compression dans lequel une combustion est réalisée en raison d'un auto-allumage de carburant injecté à partir d'une vanne d'injection de carburant dans un cylindre,
dans lequel du carburant dans une quantité définie est injecté une fois à un moment prédéterminé de sorte qu'une combustion du carburant injecté une fois est divisée en deux périodes de combustion constituées d'une période de combustion d'un constituant de réaction d'oxydation basse température dans le carburant injecté et d'une période de combustion d'autres constituants, et
**caractérisé en ce que**
l'indice de cétane du carburant est déterminé sur la base d'un couple équivalent qui est un couple intégré dans la période de combustion du constituant de réaction d'oxydation basse température.

2. Appareil de détermination de propriété de carburant d'un moteur à combustion interne selon la revendication 1, dans lequel plus le couple équivalent est élevé, plus l'indice de cétane du carburant est déterminé comme élevé.

3. Appareil de détermination de propriété de carburant d'un moteur à combustion interne selon la revendication 1 ou 2, dans lequel un moment de début d'intégration de couple équivalent dans la période de combustion du constituant de réaction d'oxydation basse température est un moment où une température de gaz dans le cylindre a atteint une température de début de réaction d'oxydation basse température du carburant, et un moment de fin d'intégration de couple équivalent est un moment où la température de gaz dans le cylindre a atteint une température de début de réaction d'oxydation haute température du carburant.

4. Appareil de détermination de propriété de carburant d'un moteur à combustion interne selon la revendication 1, 2 ou 3, où une opération de détermination de l'indice de cétane est exécutée à condition d'au moins l'achèvement de contrôle pour enseigner une quantité injectée de carburant à partir de la vanne d'injection de carburant.

5. Appareil de détermination de propriété de carburant d'un moteur à combustion interne selon l'une quelconque des revendications 1 à 4, dans lequel une opération de détermination de l'indice de cétane est exécutée en réalisant l'injection de carburant à un moment de non-charge du moteur à combustion interne.
